(19) Europäisches Patentamt
European Patent Office
Office européen des brevets

(11) **EP 3 523 472 B1**

(12) **EUROPÄISCHE PATENTSCHRIFT**

(45) Veröffentlichungstag und Bekanntmachung des Hinweises auf die Patenterteilung:
**25.05.2022   Patentblatt 2022/21**

(21) Anmeldenummer: **17808753.2**

(22) Anmeldetag: **06.10.2017**

(51) Internationale Patentklassifikation (IPC):
**D04H 1/42** (2012.01)     **D04H 1/736** (2012.01)
**B01D 39/16** (2006.01)    **D01D 5/098** (2006.01)
**D01D 10/00** (2006.01)    **D01F 1/10** (2006.01)
**D01F 6/04** (2006.01)

(52) Gemeinsame Patentklassifikation (CPC):
**D04H 1/42; B01D 39/1623; D01D 5/0985;**
**D01D 10/00; D01F 1/10; D04H 1/736;**
B01D 2239/0435; B01D 2239/0622; B01D 2239/10;
D01F 6/04

(86) Internationale Anmeldenummer:
**PCT/DE2017/100849**

(87) Internationale Veröffentlichungsnummer:
**WO 2018/065014 (12.04.2018 Gazette 2018/15)**

(54) **VERFAHREN ZUR HERSTELLUNG EINES PLISSIERBAREN TEXTILEN GEBILDES MIT ELEKTROSTATISCH GELADENEN FASERN UND PLISSIERBARES TEXTILES GEBILDE**

METHOD FOR PRODUCING A FOLDABLE TEXTILE FABRIC WITH ELECTROSTATICALLY CHARGED FIBERS, AND A FOLDABLE TEXTILE FABRIC

PROCÉDÉ DE FABRICATION D'UNE STRUCTURE TEXTILE PLISSABLE DOTÉE DE FIBRES À CHARGE ÉLECTROSTATIQUE, ET STRUCTURE TEXTILE PLISSABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2016   DE 102016118966**

(43) Veröffentlichungstag der Anmeldung:
**14.08.2019   Patentblatt 2019/33**

(73) Patentinhaber: **Groz-Beckert KG**
**72458 Albstadt (DE)**

(72) Erfinder:
• **BERKEMANN, Ralph**
  **72461 Tailfingen (DE)**
• **STAUSS, Fabian**
  **72379 Hechingen (DE)**
• **ENDRISS, Frank**
  **72474 Winterlingen-Harthausen (DE)**
• **TULKE, Andreas**
  **72458 Albstadt (DE)**

(56) Entgegenhaltungen:
EP-A1- 0 705 931          DE-A1-102006 013 170
US-A1- 2008 022 643       US-A1- 2009 293 279

EP 3 523 472 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Verfahren zur Herstellung eines plissierbaren textilen Gebildes mit elektrostatisch geladenen Fasern und plissierbares textiles Gebilde.

Die Erfindung betrifft ein Verfahren zur Herstellung eines plissierbaren textilen Gebildes, das elektrostatisch geladene Fasern aufweist, und ein plissierbares textiles Gebilde das vorzugsweise mit dem erfindungsgemäßen Verfahren hergestellt wird, wie in den Ansprüchen definiert. Das textile Gebilde wird hauptsächlich als Tiefenfiltermaterial eingesetzt. Filter, in denen dieses Tiefenfiltermaterial eingesetzt ist, zeichnen sich üblicherweise durch sehr gute Filtrationseigenschaften aus.

Aus dem Stand der Technik, insbesondere aus dem Gebiet der Filtrationstechnik, sind bereits sogenannte bimodale Vliesstoffe bekannt, die aus zwei, zumindest bereichsweise miteinander durchmischten Fasertypen bestehen. Die beiden Fasertypen unterscheiden sich in ihren mittleren Durchmessern voneinander, d.h., der bimodale Vliesstoff ist aus groben und feinen Fasern aufgebaut, die zumindest bereichsweise intensiv miteinander vermischt sind.

Bei einer Verwendung eines solchen bimodalen Vliesstoffs als Filtermaterial dienen die feineren Fasern dazu, vor allem die feineren Partikel auszufiltern, d.h., die Filtrationseffizienz bezüglich feinerer Partikel zu steigern. Die groben Fasern dienen einerseits dazu, die gröberen Partikel auszufiltern, andererseits gewährleisten die gröberen Fasern eine ausreichende mechanische Stabilität des bimodalen Vliesstoffs. Dies schließt auch ein, dass die feineren Fasern durch Mischen mit groben Fasern in einem solchen Vliesstoff einen gewissen Abstand voneinander haben. Bei einem Vliesstoff, der ausschließlich aus den feineren Fasern bestehen würde, würden die feinen Fasern zu dicht beieinander liegen, d.h., ein solcher Vliesstoff würde, in einem Filter eingesetzt, einen zu hohen Druckverlust verursachen und generell bei einer Bestaubung oder wenn er von einem Medium, das Partikel enthält, durchströmt wird, sehr schnell blockieren.

In US 2008/0026659 A1 wird die Herstellung eines bimodalen Vliesstoffs beschrieben, bei der ein einzelner Düsenbalken eingesetzt wird, der Düsen mit unterschiedlichen Kapillardurchmessern aufweist. Prinzipbedingt können mit einem solchen Düsenbalken jedoch nur bimodale Vliesstoffe erzeugt werden, bei denen der Unterschied zwischen den Mittelwerten der Durchmesser der gröberen und der feineren Fasern nicht allzu groß ist. Hinzukommt, dass alle Düsen einreihig über die Breite des verwendeten Düsenbalkens angeordent sind. Infolgedessen treten die beiden Fasertypen immer weitgehend an derselben Stelle und parallel zueinander aus dem verwendeten Düsenbalken aus. Die Durchmischung der beiden Fasertypen kann deshalb praktisch nicht beeinflusst werden.

US 8,372,175 B2 zeigt ein Verfahren zur Herstellung eines Filtermaterials, in dem gröbere Fasern mittels eines Spinnvlies-Prozesses und feinere Fasern mittels eines Meltblow-Verfahrens hergestellt und im Herstellungsverfahren vermischt werden sollen. Nach der Herstellung des Vliesstoffes können dessen Fasern, z.B. mit Hilfe von Koronaentladung oder mittels eines sogenannten Hydrochargings elektrostatisch aufgeladen werden. Die bei Spinvlies-Prozessen üblichen geringen Filamentgeschwindigkeiten unterscheiden sich deutlich von den sehr hohen Filamentgeschwindigkeiten bei Meltblow-Prozessen, d.h., die Filamentgeschwindigkeiten weichen sehr stark voneinander ab. Des Weiteren können die erheblichen Luftgeschwindigkeiten des Meltblow-Prozesses die Filamentschar erheblich negativ beeinflussen. Deshalb ist zu erwarten, dass bei der Durchmischung der Fasern sehr starke Turbulenzen auftreten und infolgedessen mit dem Verfahren keine hochwertigen, gleichmäßigen Vliesstoffe hergestellt werden können.

Prinzipiell sind Düsenbalken bekannt, die mit Düsen mit einem linearen Aufbau, die auch als Exxon-Düsen bezeichnet werden, ausgestattet sind (nachfolgend: Exxon-Düsenbalken). Des Weiteren sind auch Düsenbalken bekannt, die Düsen mit einem konzentrischen Aufbau aufweisen (nachfolgend: Düsenbalken mit konzentrischen Düsen). Eine spezielle Bauform der Düsen mit konzentrischem Aufbau, wird als Biax-Düse (benannt nach der Firma "Biax", die diese Düsen herstellt) bezeichnet.

In DE 10 2006 013 170 A1 wird ein Verfahren zur Herstellung eines bimodalen Vliesstoffs mittels zweier sogenannter Exxon-Düsenbalken vorgestellt, bei dem mit dem einen Düsenbalken die feineren und mit dem anderen Düsenbalken die gröberen Fasern hergestellt werden. Es wird aber weder angeregt, die Fasern im Verfahren elektrisch aufzuladen, noch wird vorgeschlagen, verschiedene Polymerarten für die feineren und die gröberen Fasern einzusetzen.

Des Weiteren ist in WO 2015/195648 A2 ein Verfahren für die Herstellung eines bimodalen Vliesstoffs gezeigt, bei dem die groben Fasern mit einem Düsenbalken mit konzentrischen Düsen und die feinen Fasern mit einem weiteren Düsenbalken, der entweder mit Exxon-Düsen oder konzentrischen Düsen ausgestattet sein kann, hergestellt werden. Eine elektrische Aufladung der Fasern des bimodalen Vliesstoffs wird auch bei diesem Verfahren nicht in Erwägung gezogen.

Darüber hinaus sind Methoden bekannt, mit denen die Fasern von Filtermaterialien elektrostatisch aufgeladen werden können. Durch die elektrostatische Aufladung der Fasern kann die Filtrationseffizienz von Filtrationsmaterialien, insbesondere bezüglich feiner Partikel, deutlich verbessert werden. Denn Partikel, die lediglich in die Nähe der elektrostatisch geladenen Fasern kommen, können von deren elektrischem Feld angezogen und infolgedessen vom Filter zurückgehalten werden, während die betreffenden Partikel im Falle von ungeladenen Fasern nicht zurückgehalten werden würden. Damit ändert sich das mechanische Filtrationsprinzip, das besagt, dass feine Partikel nur mittels feiner Fasern ausgefiltert werden können. Denn feine Partikel können auch mittels elektrisch geladener, grober Fasern ausgefiltert werden.

Eine bekannte Methode ist die Aufladung der Fasern mittels Koronaentladung. Mit den zur Zeit bekannten Verfahren, die eine Koronaentladung nutzen, ist jedoch keine so potente/effektive elektrostatische Aufladung der Fasern möglich.

Bei einer weiteren Methode werden Fasern mit Hilfe des Lenard Effekts (Hydrocharging; s. EP 2 609 238 B1) mit Hilfe von elektrisch geladenen Wassertröpfchen geladen.

Die Aufgabe der Erfindung besteht demnach darin, ein Verfahren zu finden, mit dem in einem Arbeitsschritt plissierbare textile Gebilde, vorzugsweise zur Verwendung als Filtermaterial für einen Elektretfilter, mit einem Lagenaufbau und/oder mit einem graduellen Verlauf der Größe der Faserdurchmesser hergestellt werden können. Dabei sollen die Fasern semipermanent elektrostatisch geladen werden können.

Für die Durchführung des Verfahrens zur Herstellung von triboelektrisch geladenen, textilen Gebilden wird eine Düsenanordnung eingesetzt, die zumindest zwei separate Düsenbalken aufweist. Das Verfahren wird bevorzugt mit genau zwei Düsenbalken durchgeführt, bei speziellen Anwendungen können in dem Verfahren aber auch drei oder mehr Düsenbalken zum Einsatz kommen.

Mit den Düsenbalken wird üblicherweise ein aus dem Stand der Technik bekannter Meltblow-Spinprozess (Schmelzspinnprozess), z.B. auch ein sogenannter Spun-Blown-Spinprozess, durchgeführt. Der erste Düsenbalken weist immer konzentrische Düsen auf, z.B. Biax-Düsen. Als zweiter Düsenbalken (und ggf. dritter/weiterer Düsenbalken) kann wahlweise ein Düsenbalken, der mit Düsen mit einem linearen Aufbau (Exxon-Düsen) oder konzentrischen Düsen, z.B. Biax-Düsen, ausgestattet ist, eingesetzt werden.

Bei Meltblow-Spinprozessen (Meltblowing) wird die Schmelze eines Polymers durch die Kapillaröffnungen eines Düsenbalkens gedrückt. Beim Austreten des Polymers aus den Kapillaröffnungen gelangt das Polymer in einen Gasstrom, üblicherweise in einen Luftstrom mit sehr hoher Geschwindigkeit. Das austretende Polymer wird von dem Gasstrom mitgerissen und dabei verstreckt, sodass Polymerfasern entstehen, die wesentlich kleinere Durchmesser haben als die Durchmesser der zugehörigen Kapillaröffnung/Kapillare. Bei Meltblow-Spinnprozessen entstehen längere Fadenstücke (d.h. längere Fasern), wobei aber im Vergleich zu Spinnvlies-Spinnprozessen wesentlich mehr Filamentabrisse auftreten können.

Zur Durchführung des Verfahrens wird mit Hilfe des ersten Düsenbalkens die Schmelze eines ersten Polymers zu Fasern eines ersten Fasertyps ausgesponnen. Mit Hilfe eines zweiten Düsenbalkens wird die Schmelze eines zweiten Polymers mittels eines Meltblow-Spinprozesses zu Fasern eines zweiten Fasertyps ausgesponnen. Ggf. wird mittels eines dritten Düsenbalkens ein drittes Polymer zu Fasern eines dritten Fasertyps ausgesponnen. Es können auch mittels weiterer Düsenbalken Fasern weiterer Fasertypen ausgesponnen werden.

Aus den Fasern aller Fasertypen, zumindest aber aus den Fasern des ersten Fasertyps und den Fasern des zweiten Fasertyps, wird mittels einer Sammeleinrichtung das erfindungsgemäße textile Gebilde ausgeformt. Die Prozessparameter werden dabei so gewählt, dass die Fasern des ersten Fasertyps einen größeren mittleren Faserdurchmesser haben als die Fasern des zweiten Fasertyps.

Die Mittelwerte der Durchmesser der beiden Fasertypen liegen dabei so weit auseinander, dass in der Gesamtverteilung der Faserdurchmesser zwei Maxima deutlich erkennbar sind. Eine solche Faserverteilung wird als "bimodale Faserverteilung" bezeichnet.

Nach Maßgabe der Erfindung werden die Fasern des ersten Fasertyps mit den Fasern des zweiten Fasertyps vor und/oder während der Ausformung des textilen Gebildes mit Hilfe der Sammeleinrichtung zumindest bereichsweise durchmischt. Zudem werden die Fasern des ersten Fasertyps und/oder die Fasern des zweiten Fasertyps, zumindest während der Fadenbildung und/oder während des Verstreckens, mit einer polaren Flüssigkeit (vorzugsweise mit Wasser in Form von feinen Tröpfchen) behandelt.

Die Prozessparameter, z.B. der Winkel zwischen den Austrittsrichtungen des ersten und des zweiten Düsenbalkens oder die sonstige räumliche Anordnung der Düsenbalken und der Sammeleinrichtung, werden so gewählt, dass bei dem erzeugten textilen Gebilde, zumindest in einem Teilbereich, die Anteile der Fasern des ersten Fasertyps und des zweiten Fasertyps einen graduellen Verlauf aufweisen. Vorzugsweise erstreckt sich dieser Teilbereich über mindestens 50%, 90% oder 98% des Volumens des textilen Gebildes.

Bei dem textilen Gebilde, bei dem es sich bevorzugt um einen Vliesstoff handelt, der als Tiefenfiltermaterial für ein elektrostatisch geladenes Filtermedium eingesetzt werden soll, wird der Gradient so ausgebildet, dass auf derjenigen Seite des Vliesstoffes, die im Filter auf der Anströmseite angeordnet werden soll, der Anteil der gröberen Fasern höher ist als der Anteil der feineren Fasern, und auf der Seite, die auf der Abströmseite angeordnet werden soll, der Anteil der feineren Fasern höher ist als der Anteil der gröberen Fasern. Dadurch wird erreicht, dass ein großer Anteil der groben Partikel bereits im Bereich der gröberen Fasern zurückgehalten wird und die feineren Partikel verstärkt in den Bereichen zurückgehalten werden, in denen der Anteil der feineren Fasern relativ hoch ist. So wird vermieden, dass die Bereiche, in denen der Anteil der feineren Fasern relativ hoch ist, rasch mit groben Partikeln zugesetzt werden. Durch den graduellen Verlauf werden zudem Grenzflächen mit großen Faserdurchmesserunterschieden vermieden, die dazu neigen, dass sich Partikel an diesen anreichern und letztendlich Blockaden verursachen. Infolgedessen wird nahezu der gesamte Querschnitt der Struktur zur Filtration genutzt.

Mit dem erfindungsgemäßen Verfahren können in einem einstufigen Prozess textile Gebilde erzeugt werden, die einen graduellen Verlauf (d.h. Gradientenverlauf) und ggf. auch einen lagenartigen Verlauf des Anteils der gröberen und der feineren Fasern aufweisen. Zudem können die Fasern potent/effektiv elektrostatisch geladen werden. Da konzentrische Düsen, wie z.B. Biax-Düsen, für die Herstellung der gröberen Fasern verwendet werden, können die gröberen Fasern noch größere Durchmesser aufweisen, als dies bei der Verwendung von Exxon-Düsen üblicherweise der Fall wäre.

Das erfindungsgemäße, plissierbare textile Gebilde besteht dementsprechend aus Fasern, die mit einem Schmelzspinnverfahren hergestellt sind. Die Fasern setzen sich aus einem ersten Fasertyp, der aus Fasern eines ersten Polymers besteht, und einem zweiten Fasertyp zusammen, der aus Fasern eines zweiten Polymers besteht. Der mittlere Durchmesser der Fasern des ersten Fasertyps ist dabei größer ist als der mittlere Durchmesser des zweiten Fasertyps. Zumindest in einem Teilvolumen des textilen Gebildes weisen die Anteile der Fasern des ersten Fasertyps und der Fasern des zweiten Fasertyps über den Querschnitt des textilen Gebildes einen Gradientenverlauf auf. Zumindest ein Teil der Fasern des ersten und/oder des zweiten Fasertyps ist dabei elektrostatisch geladen.

Unter Verwendung des textilen Gebildes als Filtermaterial können verbesserte Filter hergestellt werden, die über eine hohe Filtrationseffizienz und ein hohes Partikelspeichervermögen (ein hohes Staubspeichervermögen im Falle von Luftfiltern) verfügen. Zudem kann der Durchmesser der gröberen Fasern so groß gewählt werden, dass das Filtermaterial (Vliesmaterial) ohne Substrate, wie z.B. Spinnvliese, eingesetzt werden kann. Insbesondere sind Qualitätsfaktoren von größer 0,2 erreichbar. Der Qualitätsfaktor QF ist hierbei definiert als

$$QF = (-\ln(\text{ NaCl\% Penetration}/100))/\text{Druckverlust in mmH}_2\text{O})$$

Die genaue Bestimmung des "NaCl% Penetration" (Durchdringungsfaktor eines unbeladenen Filters) und auch die Messung des Druckverlusts kann mit einem Filtertester TSI Model 8130 bei einer Durchströmgeschwindigkeit von 0,1m/s und mit einer 2%igen NaCl Lösung durchgeführt werden.

Die Sammeleinrichtung ist bevorzugt ein mit einer Ansaugeinrichtung ausgestattetes Transportband oder eine Transporttrommel. Die Fasern des ersten und des zweiten Fasertyps werden von der Ansaugeinrichtung des Transportbands bzw. der Transporttrommel angesaugt und gemeinsam auf dem Transportband/auf der Transporttrommel abgelegt.

Üblicherweise wird das textile Gebilde aus den Fasern des ersten Fasertyps und den Fasern des zweiten Fasertyps mittels der Sammeleinrichtung so ausgeformt, dass vor und/oder während des Sammelns der Fasern, z.B. durch Ablegen der Fasern auf einem Auffangband oder einer Auffangtrommel, eine Durchmischung der beiden Fasertypen stattfindet. Durch das Sammeln der Fasern wird das textile Gebilde ausgebildet. Im fertigen textilen Gebilde sind dann die Fasern des ersten Fasertyps mit den Fasern des zweiten Fasertyps zumindest bereichsweise durchmischt. Der Bereich kann aber so klein sein, dass quasi zwei (bzw. drei oder mehr, falls drei oder mehr Düsenbalken eingesetzt werden) diskrete Lagen vorliegen, die lediglich durch einen sehr dünnen Durchmischungsbereich zusammengehalten werden

Wird ein erfindungsgemäßer Vliesstoff für die Herstellung eines plissierten Filters verwendet, kann als Tiefenfiltermaterial ein dünnerer Vliesstoff gewählt werden, der jedoch dieselbe Partikel- oder Staubaufnahmekapazität hat, wie ein konventionell hergestellter, dickerer Vliesstoff. Bei plissierten Filtern tragen üblicherweise die Falze bzw. Kuppen der Falten nicht oder lediglich minimal zur Filtration bei. Infolgedessen ist die Filtrationswirkung von aus den erfindungsgemäßen, dünnen Vliesstoffen hergestellten Filtern besser als bei aus dickeren Vliesstoffen hergestellten Filtern. Denn im Falle der dünneren Vliesstoffe ist die für die Filtration unwirksame Fläche der Falze/der Kuppen der Falten kleiner als im Fall der dickeren Vliesstoffe.

Die Fasern des ersten Fasertyps, d.h. die gröberen Fasern, werden bevorzugt derart ausgesponnen, dass der Mittelwert der Faserdurchmesser größer 10 $\mu$m, größer 15 $\mu$m, größer 25 $\mu$m oder größer 50 $\mu$m ist. Der Mittelwert der Faserdurchmesser kann in einem Bereich von z.B. 2 $\mu$m bis 200 $\mu$m, 5 $\mu$m bis 60 $\mu$m oder 10 $\mu$m bis 30 $\mu$m liegen. Bevorzugt liegt der Mittelwert der Faserdurchmesser im Bereich von 5 $\mu$m bis 60 $\mu$m.

Die Fasern des zweiten Fasertyps, d.h. die feineren Fasern, werden bevorzugt derart ausgesponnen, dass der Mittelwert der Faserdurchmesser kleiner 11 $\mu$m, kleiner 5 $\mu$m oder kleiner 3 $\mu$m ist. Die Faserdurchmesser der kleinsten Fasern des zweiten Fasertyps können dabei minimale Durchmesser von bis zu 20 nm erreichen.

Um eine bimodale Verteilung der Faserdurchmesser zu erreichen, kann ein erster Düsenbalken verwendet werden, der Düsen aufweist, die einen Durchmesser aus einem Bereich von 500 bis 850 $\mu$m haben, und ein zweiter Düsenbalken verwendet werden, der Düsen aufweist, die einen Durchmesser von 100 bis 500 $\mu$m haben.

Bei der Durchführung des erfindungsgemäßen Verfahren hat es sich bewährt, (als erstes und als zweites Polymer für die Fasern des ersten und zweiten Fasertyps) generell Polymere einzusetzen, die Schmelzflussindizes (nachfolgend: MFI; melt flow index) von kleiner 1000, kleiner 500 oder kleiner 300 haben. Die Ermittlung des MFI soll, falls möglich, gemäß ISO 1133 erfolgen. Ansonsten soll nach der ASTM D1238 vorgegangen werden. In der untenstehenden Tabelle sind weitere Standardbedingungen für verschiedene Polymere aufgeführt. Sind in beiden Normen und in der angegebenen Tabelle keine Standardparameter für die Ermittlung des MFI des betreffenden Polymers vorhanden, soll auf vorhandene Tabellenwerke zurückgegriffen werden, wie z.B. das DIN Taschenbuch "Thermoplastische Formmassen", die CAMPUS-Datenbank oder die Werkstoffdatenblätter der Hersteller des betreffenden Polymers. Da oftmals für dasselbe Polymer für die Ermittlung des MFI mehrere Parametersätze, insbesondere mehrere Prüftemperaturen und/oder Prüflasten, angegeben sind, soll in einem solchen Fall immer der Parametersatz mit der höchsten Temperatur und ggf. der Parametersatz gewählt werden, der neben der höchsten Temperatur zusätzlich die höchste Prüflast vorgibt.

## Tabelle 1: Standardparameter für die Messung der MFIs verschiedener Polymere

| Prüftemperatur/°C | Prüflast/kg | | | | | | |
|---|---|---|---|---|---|---|---|
| | 0,325 | 1,2 | 2,16 | 3,8 | 5 | 10 | 21,6 |
| 125 | EVA | | | | | | |
| 150 | | | EVA | | | | |
| 190 | | | PE EVA POM | | PE PP | | PE WPC |
| 200 | | | | | PS | | |
| 220 | | | | | | ABS SAN ASA | |
| 230 | | | PP | PMMA | PP PVDF | | |
| 235 | | | PA-12 PA-11 | | PA-12 PA-11 | PA-11 | |
| 250 | | | PBT | | | | |
| 260 | | | PBT | | PMP | PMMI | |
| 275 | | | | | PA | | |
| 280 | | PPE/PS | PET PPE/PS | PPE/PS | PPE/PS | | |
| 300 | | PC | PPE/PS | | PA-GF PPE/PS | PPE/PS | |
| 315 | | | | | PPS | | |
| 330 | | | PC | | | PA6T | |
| 340 | | | PC | | | PEI | |
| 343 | | | PSU | | | | |
| 360 | | | | | | PES PPSU PSU | |
| 400 | | | PES PPSU PEEK | | | | |

Als erstes Polymer kann vorteilhafterweise Polypropylen (PP), Polycarbonat (PC), Polyactd (PLA) oder Polyamid (PA) eingesetzt werden oder es können Gemische aus diesen Polymeren eingesetzt werden. Als zweites Polymer wird bevorzugt Polypropylen (PP), Polyethylen (PE), Polycarbonat (PC), Polylactd (PLA), Polyamid (PA), Polybutylenterephthalat (PBT), Polyethylenterephthalat (PET) oder Polynenylidenfuorid (PVDF) eingesetzt oder es können Gemische aus diesen Polymeren eingesetzt werden.

Eine besonders intensive und langanhaltende statische Aufladung kann dadurch erreicht werden, dass als erstes Polymer und/oder als zweites Polymer ein Polymer verwendet wird, das mindestens ein Additiv enthält, das Radiale binden kann, d.h. einen sogenannten Radikalfänger. Als Radikalfänger kann z.B. einen Stoff aus der Gruppe der sterisch gehinderten Amine (sogenannte HALS: Hindered-Amine Light Stabilizers), wie z.B. das unter dem Handelsnamen bekannte Chimasorb® 944, eingesetzt werden. Als Alternative zu den HALs können aber auch Stoffe aus der Gruppe der Piserazine oder aus der Gruppe der Oxazolidone eingesetzt werden.

Es hat sich auch bewährt, ein erstes Polymer und/oder ein zweites Polymer zu verwenden, das mindestens ein Additiv enthält, das als inneres Gleitmittel (Migrationshilfsstoff) wirken kann, wie z.B. einen Stoff aus der Gruppe der Steramide. Als besonders geeignet hat sich Distearylethylendiamid erwiesen (sogenanntes EBS: Ethylene bis(stearamide), auch bekannt unter dem Handelsnamen Crodamide® EBS).

Vorzugsweise werden Polymere eingesetzt, die mindestens eines der oben genannten Additive, das als Radikalfänger wirken kann und gleichzeitig mindestens eines der oben beschriebenen Additive, das als inneres Gleitmittel wirken kann, enthalten. Eine besonders gute Wirkung dieser Zusätze/Additive wurde in Verbindung mit Polypropylen beobachtet.

Die als Radikalfänger wirkenden Stoffe sind in der Lage, elektrostatische Ladungen vergleichsweise langfristig zu binden. Durch die inneren Gleitmittel wird bewirkt, dass sich Stoffe, die in der Lage sind, Ladungen langfristig zu binden, in einem geschmolzenen Polymer leichter an die Oberfläche des Polymers bewegen können. Da eine elektrostatische Aufladung immer über die Oberfläche erfolgt, steht damit ein größerer Anteil dieser Stoffe für die Bindung der elektrostatischen Ladungen zur Verfügung. Die betreffenden Stoffe haben praktisch keine Wirkung, wenn sie sich im Innern des Polymers (der Polymerfaser) befinden.

Des Weiteren kann ein erstes Polymer und/oder ein zweites Polymer eingesetzt werden, das mindestens ein weiteres Additiv enthält, das in der Lage ist, z.B. physikalisch, zusätzliche Ladungen zu binden, wie z.B. ferroelektrische Keramiken (z.B. Bariumtitanat) oder alternativ ein weiteres Additiv enthält, das dazu geeignet ist, zu verhindern, dass Ladungen, die sich bereits auf den betreffenden Fasern befinden, zu schnell abgegeben werden (d.h. das quasi einen Schutz der vorhandenen Ladungen bewirkt). Hierfür können auch vorteilhafterweise Flourchemikalien, wie z.B. fluorhaltiges Oxazolidinon, fluorhaltiges Piperazin oder ein Stearatester von Pefluoralkholen, eingesetzt werden.

Zur weiteren Verbesserung des Filters können den Fasern des ersten Fasertyps und/oder den Fasern des zweiten Fasertyps Feinstfasern (d.h. Fasern mit einem mittleren Faserdurchmesser von kleiner 1 $\mu$m) beigemengt werden. Alternativ oder zusätzlich können den Fasern des ersten Fasertyps und/oder den Fasern des zweiten Fasertyps auch Stapelfasern, z.B. mittels eines sogenannten Rando Webers, oder Partikel, wie z.B. Aktivkohlepartikel, z.B. mittels einer Streurinne, beigemengt werden.

Die Beimengung erfolgt im erfindungsgemäßen Verfahren vor und/oder während der Ausformung des textilen Gebildes in der Sammeleinrichtung. Die Feinstfasern werden üblicherweise nicht als fertige Fasern/Partikel sondern mittels einer separaten Spinneinrichtung, z.B. mittels einer Solution-Blow-Spinneinrichtung, welche die Feinstfasern direkt vor ihrer Beimengung erzeugt, zugegeben.

Die Erfindung wird nachfolgend anhand von Ausführungsbeispielen näher erläutert. Hierzu zeigen:

Fig. 1    Einen schematischen Aufbau einer Meltblow-Anlage mit einem Biax-Düsenbalken mit einreihigem Aufbau,

Fig. 2    Einen schematischen Aufbau einer Meltblow-Anlage mit einem Biax-Düsenbalken mit mehrreihigem Aufbau,

Fig. 3    Einen schematischen Aufbau einer Meltblow-Anlage mit einer Düsenanordnung, die aus einem Exxon- und einem Biax-Düsenbalken besteht,

Fig. 4    Einen schematischen Aufbau einer Meltblow-Anlage mit einer Düsenanordnung, die aus zwei Biax-Düsenbalken besteht,

Fig. 5    Einen schematischen Aufbau einer Anlage mit einem Biax-Düsenbalken und einer Solution-Blow-Spinneinrichtung,

Fig. 6    Einen Biax-Düsenbalken mit einer Art von konzentrischen Düsen, die gleiche Kapillardurchmesser aufweisen,

Fig. 7    Einen Biax-Düsenbalken mit zwei verschiedenen Arten von konzentrischen Düsen, die unterschiedliche Kapillar-und/oder Düsenrohr- und/oder Luftaustrittsöffnungsdurchmesser haben,

Fig. 8    Eine schematische Darstellung der Geometrie einer Meltblow-Anlage mit zwei Düsenbalken,

Fig. 9    Eine REM-Aufnahme sowie die zugehörigen Faserverteilungen der Oberseite eines Faservlieses mit Lagenaufbau,

Fig. 10    Eine REM-Aufnahme sowie die zugehörigen Faserverteilungen der Unterseite eines Faservlieses mit Lagenaufbau,

Fig. 11    Eine REM-Aufnahme sowie die zugehörigen Faserverteilungen der Oberseite eines Faservlieses mit teilweiser Durchmischung,

Fig. 12    Eine REM-Aufnahme sowie die zugehörigen Faserverteilungen der Unterseite eines Faservlieses mit teilweiser Durchmischung,

Fig. 13    Eine REM-Aufnahme sowie die zugehörigen Faserverteilungen der Oberseite eines Faservlieses mit vollständiger Durchmischung,

Fig. 14    Eine REM-Aufnahme sowie die zugehörigen Faserverteilungen der Unterseite eines Faservlieses mit vollständiger Durchmischung.

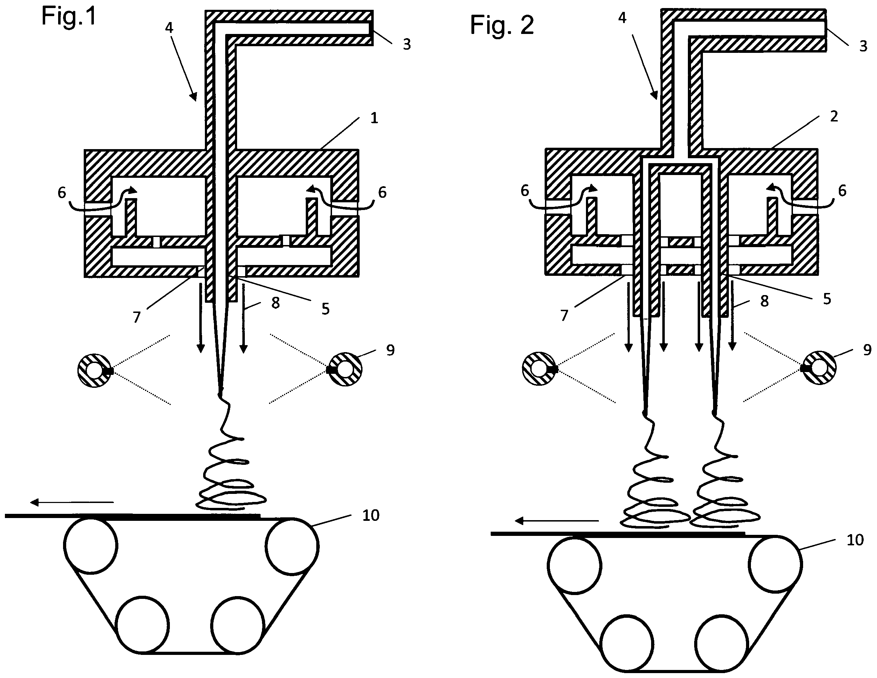

In Fig. 1 ist der schematische Aufbau einer Meltblow-Anlage gezeigt, die einen einreihigen Biax-Düsenbalken 1 aufweist, d.h., bei dem Düsenbalken sind die Biax-Düsen in einer Reihe über die Düsenbalkenbreite angeordnet. Fig. 2 zeigt einen analogen Aufbau mit einem mehrreihigen Biax-Düsenbalken 2.

Wie aus den Fig. 1 und 2 entnommen werden kann, wird jeweils ein flüssiges Polymer 3 in die Biax-Düsenbalken 1, 2 mittels einer Polymerzuleitung 4 eingeleitet und tritt am Ende des Düsenrohrs 5 wieder aus. In die Biax-Düsen wird ebenfalls komprimierte Heißluft 6 eingeleitet, die an der Austrittsöffnung 7 als Verstreckluft 8 wieder austritt. Das austretende Polymer 3 wird von der Verstreckluft 8 erfasst, wodurch eine Verstreckung der vom austretenden Polymer 3 gebildeten Polymerfäden bewirkt wird. Direkt nach dem Austritt aus den Düsenrohren werden die Polymerfäden mittels Sprüheinrichtungen 9 mit einer ausreichenden Menge Wasser besprüht, wodurch sie elektrostatisch aufgeladen werden (Hydrocharging). Die betreffenden Polymerfasern werden auf dem Auffangband 10 (Sammelband) abgelegt.

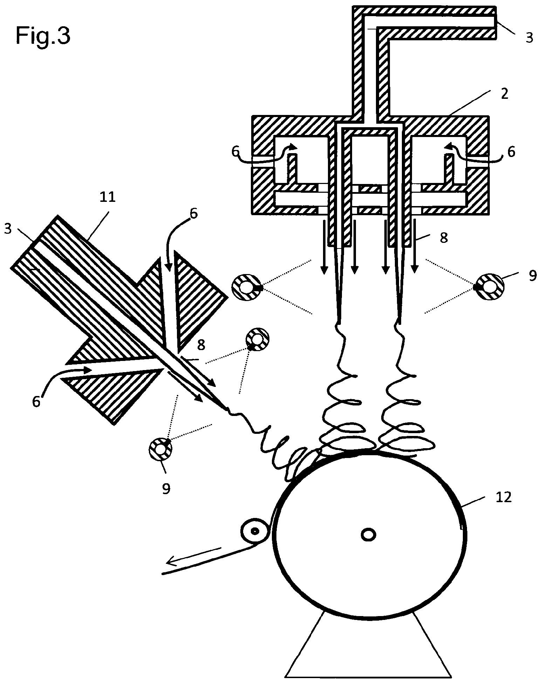

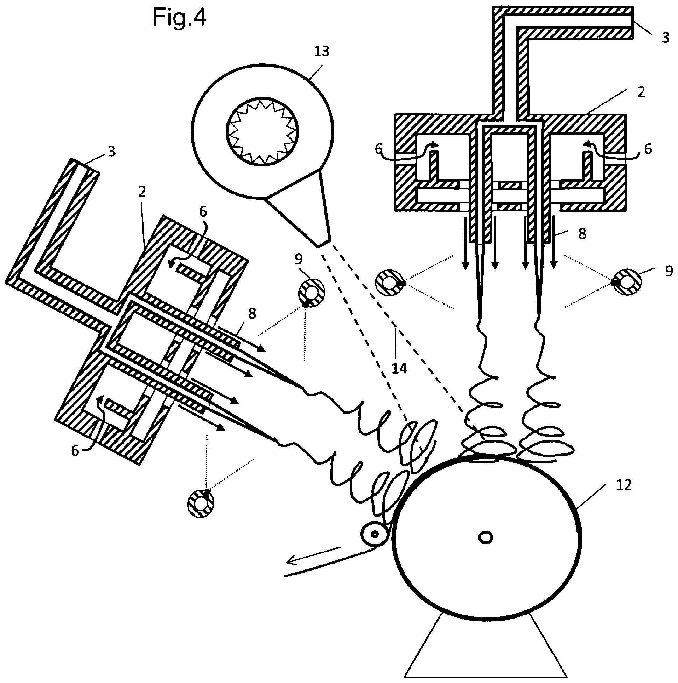

In Fig. 3 ist eine Meltblow-Anlage mit einer Düsenanordnung gezeigt, die jeweils aus einem mehrreihigen Biax-Düsenbalken 2 und einem Exxon-Düsenbalken 11 besteht. Die erzeugten zwei Fasertypen werden hier auf einer Auffangtrommel 12 abgelegt. Fig. 4 zeigt eine ähnliche Meltblow-Anlage jedoch mit zwei mehrreihigen Biax-Düsenbalken 2. Die Anlage umfasst zudem einen Rando Weber 13, mit welchem den erzeugten Fasern vor dem Ablegen auf dem Transportband Kurzschnittfasern 14 zugegeben werden können. Anstelle des Rando Webers 13 ist es auch möglich, über eine Streurinne Partikel einzumischen.

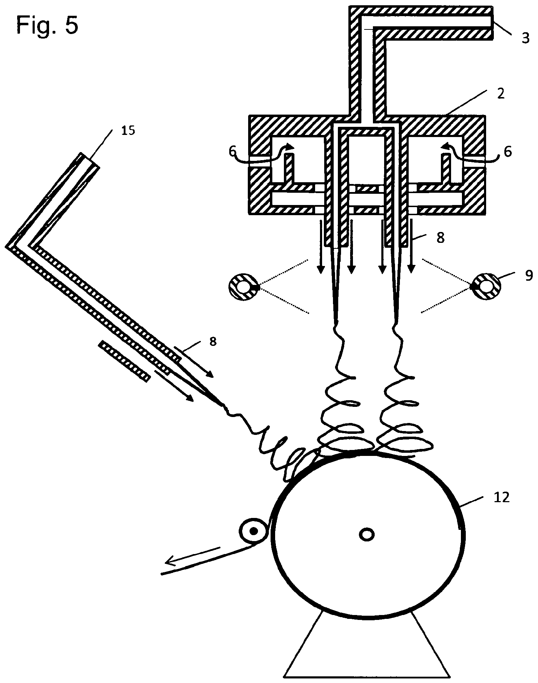

In Fig. 5 ist eine Anlage (nicht erfindungsgemäß) dargestellt, bei der die feineren Fasern mittels eines Solution-Blowing-Prozesses hergestellt werden. Statt einer Polymerschmelze 3 wird hierbei eine Polymerlösung 15 für die Faserherstellung verwendet.

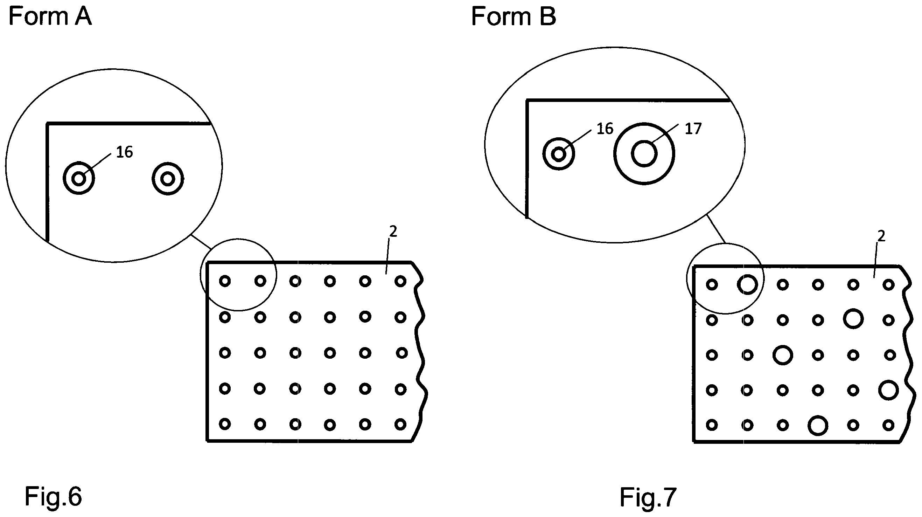

Fig. 6 zeigt einen mehrreihigen Biax-Düsenbalken 2 von der Seite aus der das Polymer austritt, der gleich große Biax-Düsenrohre 16 mit Kapillaren aufweist, wohingegen Fig. 7 einen mehrreihigen Biax-Düsenbalken 2 zeigt, der kleinere Biax-Düsenrohre 16 mit Kapillaren und größere Biax-Düsenrohre 17 (mit Kapillaren) umfasst.

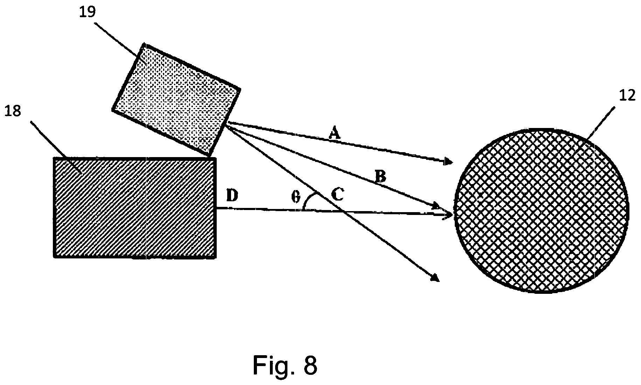

In Fig. 8 ist schematisch dargestellt, wie die Geometrie einer Meltblow-Anlage, die einen ersten Düsenbalken 18 und einen zweiten Düsenbalken 19 aufweist, eingestellt werden kann. Bei den nachfolgend gezeigten Versuchen wurden, um den Schichtaufbau der mit der Anlage erzeugten Faservliese gezielt einzustellen, erstens die Achse A, B oder C des zweiten Düsenbalkens 19 um einen Winkel θ bezüglich der Achse D des ersten Düsenbalkens 18 verkippt und/oder der Abstand des zweiten Düsenbalkens 19 zu der Auffangtrommel 12 variiert. Typischerweise erfolgt eine Verkippung um 15° bis 60°. Zweitens wurde die Länge der Achse D, d.h. der Abstand des ersten Düsenbalkens 18 zu der Auffangtrommel 12, variiert. Um hochwertige Faservliese zu erhalten, sind die Durchmesser der Kapillaren der Düsen sowie die Anzahl der Düsen, der jeweilige Polymerdurchsatz und die Verstreckluftmengen so zu wählen, dass eine ausreichende Anzahl von feinen und groben Fasern ausgesponnen wird und gleichzeitig ein möglichst homogenes Vlies erzeugt wird.

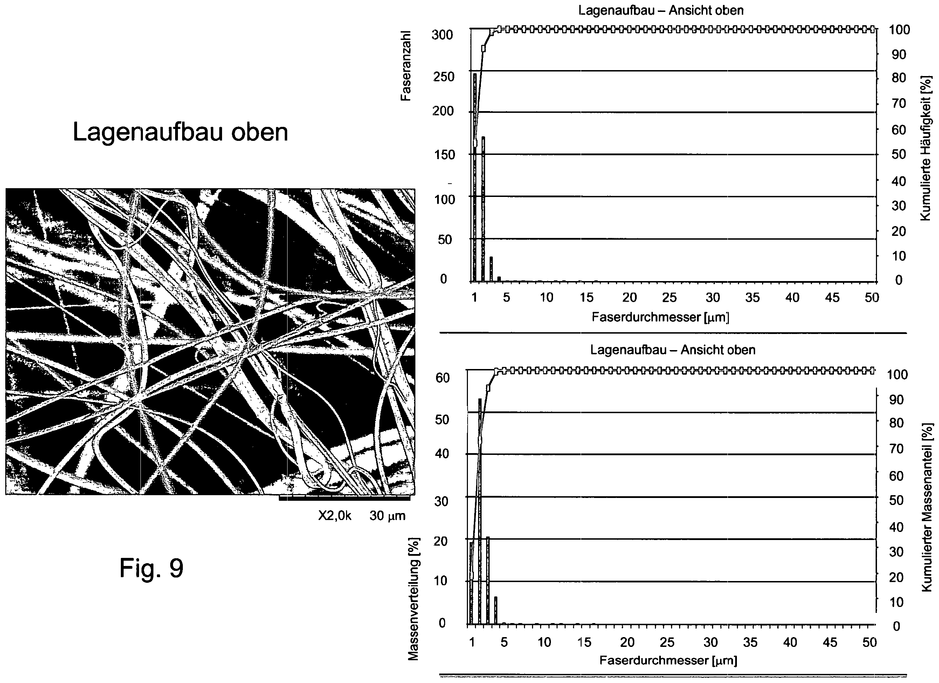

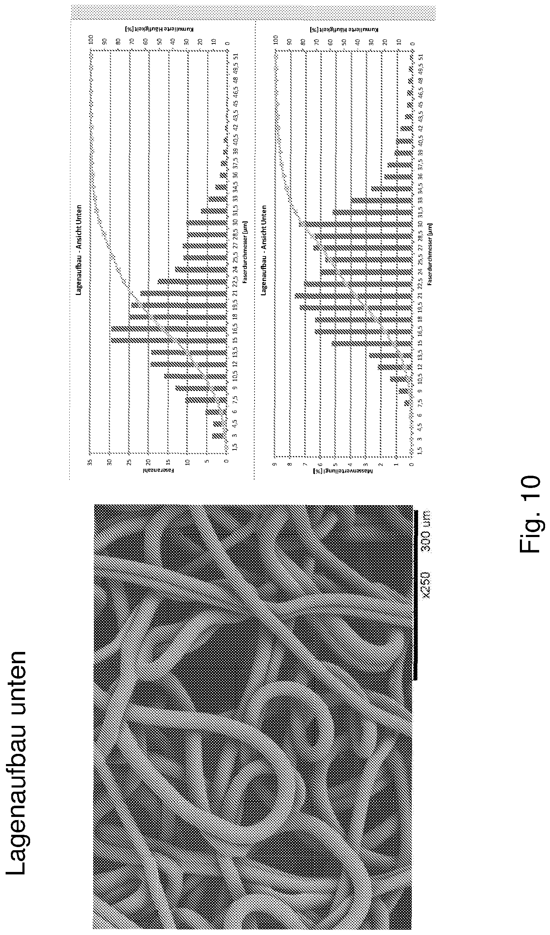

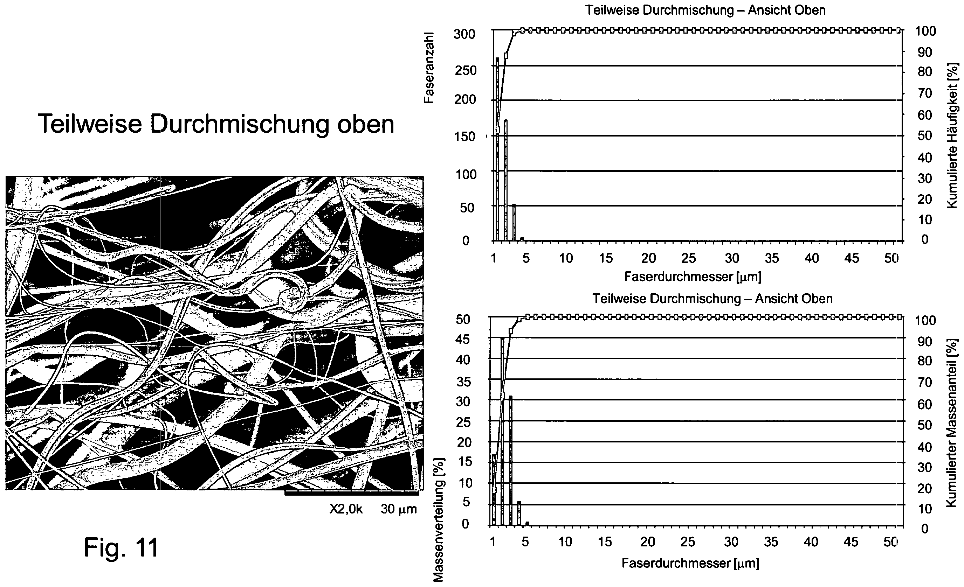

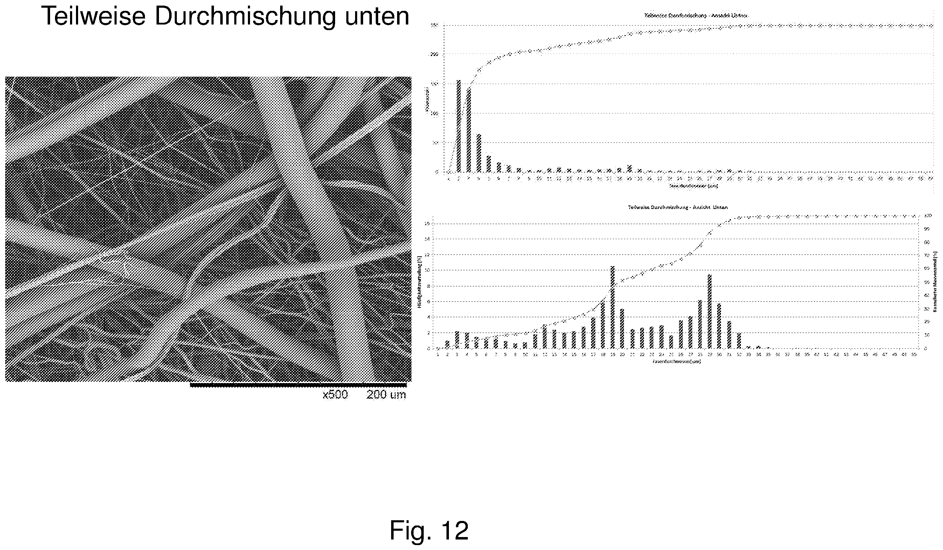

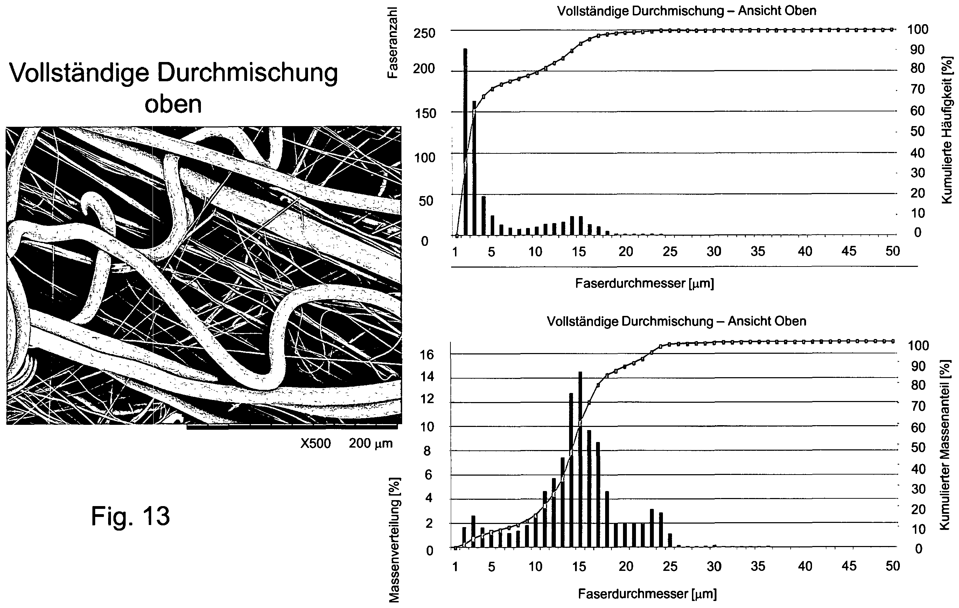

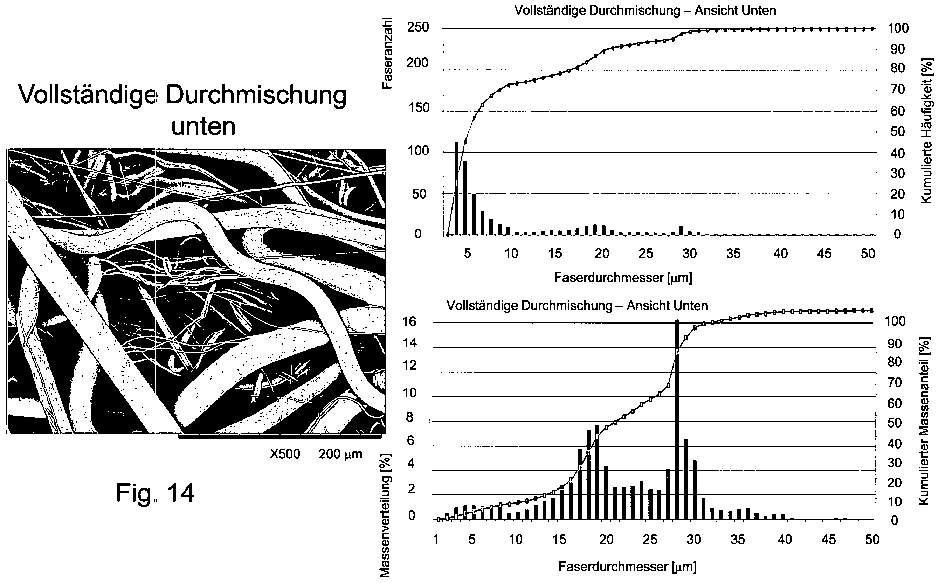

Durch eine geeignete Wahl der Parameter können generell jeweils Faservliese mit einem Lagenaufbau, mit einer teilweisen Durchmischung (mit Gradientenstruktur) der beiden Fasertypen oder mit einer vollständigen (weitgehend homogenen nur geringe Gradientenstrukur) Durchmischung der beiden Fasertypen hergestellt werden. In den Figuren 9 bis 14 sind jeweils eine REM-Aufnahme sowie die zugehörigen Faserverteilungen für einen Lagenaufbau oben (Fig. 9) und unten (Fig. 10), eine teilweise Durchmischung oben (Fig. 11) und unten (Fig. 12) sowie für eine vollständige Durchmischung oben (Fig. 13) und unten (Fig. 14) gezeigt.

Experiment: Zur Untersuchung des Einflusses sowohl des Aufbaus des Faservlieses als auch des Einflusses elektrostatisch geladener Fasern im betreffenden Faservlies auf die Filtrationseigenschaften wurde eine Versuchsreihe durchgeführt. Zuerst wurden hierbei die Additive Crodamide EBS und Chimasorb 944 im Verhältnis 1:1 aufgeschmolzen und der Polymerschmelze vorzugsweise durch Co-Extrusion in ausreichender Menge zugeführt. Die Schmelze wurde anschließend gut gemischt.

Bei den Vliesen mit elektrostatisch geladenen Fasern, die jeweils ein Flächengewicht von ca. 50 g/m$^2$ aufwiesen, wurden bei deren Herstellung die beiden von den jeweiligen Düsenbalken erzeugten Faserstrahlen von beiden Seiten mit einer ausreichenden Menge Wasser besprüht und zwar bevor die beiden Faserstahlen zusammentrafen, sodass die in den Faserstrahlen enthaltenen Fasern intensiv geladen wurden.

Die so erzeugten Faservliese wurden anschließend mit einem Filtertester TSI Model 8130 bei einer Durchströmgeschwindigkeit von 0,1m/s mit einer 2%igen NaCl-Lösung gemessen. Die Ergebnisse sind in den beiden nachfolgenden Tabellen aufgeführt.

| | Prozess parameter | Verstrecklufttemperatur | Düsentemp. | Polymer | Exterudert emp. | DCD |
|---|---|---|---|---|---|---|
| Muster | | °C | °C | °C | °C | mm |
| Lagenaufbau | 1. Biax-Düse (64) | 240°C | 230°C | | 220°C | 300 |
| Lagenaufbau | 2. Biax-Düse (62) | 290°C | 250°C | LyondellBasell Metocene MF650X | 250°C | 200 |
| Teilweise Durchmischung | 1. Biax-Düse (64) | 240°C | 230°C | LyondellBasell Metocene MF650W | 220°C | 280 |
| Teilweise Durchmischung | 2. Biax-Düse (62) | 290°C | 250°C | LyondellBasell Metocene MF650X | 250°C | 380 |
| Vollständige Durchmischung | 1. Biax-Düse (64) | 235°C | 230°C | LyondellBasell Metocene MF650W | 220°C | 300 |
| Vollständige Durchmischung | 2. Biax-Düse (62) | 290°C | 250°C | LyondellBasell Metocene MF650X | 250°C | 380 |

| | | Duckverlust | Penetration | Effizienz | QF [1/mmH2O] |
|---|---|---|---|---|---|
| | | [mmH$^2$O] | [%] | [%] | |
| Lagenaufbau | Unbehandelt | 3,1 | 77,3 | 22,7 | 0,08 |
| Lagenaufbau | Mit Additiv und Wasserquench | 2,5 | 23,2 | 76,8 | 0,58 |
| Teilweise Durchmischung | Unbehandelt | 3,2 | 69,4 | 30,6 | 0,11 |
| Teilweise Durchmischung | Mit Additiv und Wasserquench | 2,5 | 5,4 | 94,6 | 1,19 |
| Vollständige Durchmischung | Unbehandelt | 2,9 | 79,2 | 20,8 | 0,08 |
| Vollständige Durchmischung | Mit Additiv und Wasserquench | 2,3 | 15,3 | 84,7 | 0,82 |

Überraschenderweise wurde festgestellt, dass die Faservliese mit teilweiser Durchmischung und elektrostatisch geladenen Fasern sehr viel höhere Qualtitätsfaktoren QF zeigten, als alle anderen Faservliese.

| Bezugszeichenliste | |
|---|---|
| 1 | Biax-Düsenbalken einreihig |
| 2 | Biax-Düsenbalken mehrreihig |
| 3 | Polymer |
| 4 | Polymerzuleitung |
| 5 | Düsenrohr mit Kapillare |
| 6 | Komprimierte Heißluft |
| 7 | Austrittsöffnung für Verstreckluft |
| 8 | Verstreckluft (koaxial) |
| 9 | Sprüheinrichtung |
| 10 | Auffangband |
| 11 | Exxon-Düsenbalken |
| 12 | Auffangtrommel |
| 13 | Rando Weber |
| 14 | Kurzschnittfasern |
| 15 | Polymerlösung |
| 16 | Kleinere Biax-Düsenrohre mit Kapillare |
| 17 | Größere Biax-Düsenrohre mit Kapillare |
| 18 | Erster Düsenbalken |
| 19 | Zweiter Düsenbalken |
| A, B, C | Achsen des zweiten Düsenbalkens |
| D | Achse des ersten Düsenbalkens |
| θ | Kippwinkel zwischen der Achse des ersten Düsenbalkens und den Achsen des zweiten Düsenbalkens |

# EP 3 523 472 B1

**Patentansprüche**

1. Verfahren zur Herstellung eines plissierbaren textilen Gebildes mit elektrostatisch geladenen Fasern, vorzugsweise zur Verwendung als Filtermaterial für einen Elektretfilter,

   wobei in dem Verfahren eine Düsenanordnung verwendet wird, die aus zumindest zwei separaten Düsenbalken aufgebaut ist, wobei zumindest der erste Düsenbalken konzentrische Düsen aufweist,
   und mit Hilfe des ersten Düsenbalkens ein erstes Polymer zu Fasern eines ersten Fasertyps ausgesponnen wird und mittels des zweiten Düsenbalkens ein zweites Polymer zu Fasern eines zweiten Fasertyps ausgesponnen wird,
   wobei die Fasern des ersten und des zweiten Fasertyps derart ausgesponnen werden, dass die Fasern des ersten Fasertyps einen größeren mittleren Faserdurchmesser haben als die Fasern des zweiten Fasertyps,
   wobei die Mittelwerte der Durchmesser der beiden Fasertypen so weit auseinanderliegen, dass in der Gesamtverteilung der Faserdurchmesser zwei Maxima deutlich erkennbar sind,
   wobei vor und/oder während der Ausformung des textilen Gebildes mit Hilfe der Sammeleinrichtung die Fasern des ersten Fasertyps mit den Fasern des zweiten Fasertyps zumindest bereichsweise durchmischt werden,
   und die Fasern des ersten Fasertyps und/oder die Fasern des zweiten Fasertyps, zumindest während der Fadenbildung und/oder während des Verstreckens, mit einer polaren Flüssigkeit behandelt werden, wodurch die Fasern elektrostatisch aufgeladen werden, wobei vor und/oder während der Ausformung des textilen Gebildes die Fasern des ersten Fasertyps mit den Fasern des zweiten Fasertyps derart durchmischt werden, dass, zumindest in einem Teilvolumen des textilen Gebildes, die Anteile der Fasern des ersten Fasertyps und der Fasern des zweiten Fasertyps über den Querschnitt des textilen Gebildes einen Gradientenverlauf aufweisen, wobei der Gradient vorzugsweise so ausgebildet wird, dass auf derjenigen Seite des Vliesstoffes, die im Filter auf der Anströmseite angeordnet werden soll, der Anteil der gröberen Fasern höher ist als der Anteil der feineren Fasern, und auf der Seite, die auf der Abströmseite angeordnet werden soll, der Anteil der feineren Fasern höher ist als der Anteil der gröberen Fasern.

2. Verfahren nach Anspruch 1, **dadurch gekennzeichnet, dass** sowohl die Fasern des ersten Fasertyps als auch die Fasern des zweiten Fasertyps mittels der polaren Flüssigkeit elektrostatisch aufgeladen werden.

3. Verfahren nach einem der Ansprüche 1 und 2, **dadurch gekennzeichnet, dass** für die elektrostatische Aufladung Wasser als polare Flüssigkeit eingesetzt wird.

4. Verfahren nach Anspruch 1, **dadurch gekennzeichnet, dass** vor und/oder während der Ausformung des textilen Gebildes die Fasern des ersten Fasertyps mit den Fasern des zweiten Fasertyps derart durchmischt werden, dass in zumindest 50% des Volumens des textilen Gebildes die Anteile der Fasern des ersten Fasertyps und der Fasern des zweiten Fasertyps einen Gradientenverlauf aufweisen.

5. Verfahren nach einem der vorstehenden Ansprüche, **dadurch gekennzeichnet, dass** als erstes Polymer für die Herstellung der Fasern des ersten Fasertyps ein Polymer mit einem Schmelzflussindex von kleiner 800 eingesetzt wird.

6. Verfahren nach einem der vorstehenden Ansprüche, **dadurch gekennzeichnet, dass** für die Herstellung der Fasern des zweiten Fasertyps ein Düsenbalken mit konzentrischen Düsen verwendet wird, und als zweites Polymer ein Polymer mit einem Schmelzflussindex von kleiner 2000 eingesetzt wird.

7. Verfahren nach einem der Ansprüche 1 bis 5, **dadurch gekennzeichnet, dass** für die Herstellung der Fasern des zweiten Fasertyps ein Düsenbalken, der Exxon-Düsen aufweist, verwendet wird, und als zweites Polymer ein Polymer mit einem Schmelzflussindex von größer 300 eingesetzt wird.

8. Verfahren nach einem der vorstehenden Ansprüche, **dadurch gekennzeichnet, dass** als erstes Polymer und/oder als zweites Polymer Polypropylen, Polyethylen, Polycarbonat, Polylactid, Polyamid, Polybutylenterephthalat, Polyethylenterephthalat, Polyvinylidenfluorid oder ein Gemisch aus diesen Polymeren eingesetzt wird.

9. Verfahren nach einem der vorstehenden Ansprüche, **dadurch gekennzeichnet, dass** ein erstes Polymer und/oder ein zweites Polymer verwendet wird, das mindestens ein Additiv enthält, das Radikale binden kann.

10. Verfahren nach einem der vorstehenden Ansprüche, **dadurch gekennzeichnet, dass** ein erstes Polymer und/oder ein zweites Polymer verwendet wird, das mindestens ein Additiv enthält, das als inneres Gleitmittel wirken kann.

11. Verfahren nach einem der vorstehenden Ansprüche, **dadurch gekennzeichnet, dass** den Fasern des ersten Fasertyps und den Fasern des zweiten Fasertyps vor und/oder während der Ausformung des textilen Gebildes mittels der Sammeleinrichtung Feinstfasern mit einem mittleren Faserdurchmesser von kleiner 1 μm beigemischt werden.

12. Plissierbares textiles Gebilde bestehend aus Fasern, die mittels eines Schmelzspinnprozesses hergestellt sind, wobei sich die Fasern aus einem ersten Fasertyp, der aus einem ersten Polymer besteht, und einem zweiten Fasertyp, der aus einem zweiten Polymer besteht, zusammensetzen, wobei die Mittelwerte der Durchmesser der beiden Fasertypen so weit auseinanderliegen, dass in der Gesamtverteilung der Faserdurchmesser zwei Maxima deutlich erkennbar sind, und der mittlere Durchmesser der Fasern des ersten Fasertyps größer ist als der mittlere Durchmesser des zweiten Fasertyps, wobei zumindest in einem Teilvolumen des textilen Gebildes die Anteile der Fasern des ersten Fasertyps und der Fasern des zweiten Fasertyps über den Querschnitt des textilen Gebildes einen Gradientenverlauf aufweisen, wobei zumindest ein Teil der Fasern des ersten und/oder des zweiten Fasertyps elektrostatisch geladen ist, wobei mit dem textilen Gebilde Filter mit einem Qualitätsfaktor von größer 0,2 herstellbar sind.

13. Plissierbares textiles Gebilde nach Anspruch 12, **dadurch gekennzeichnet, dass** die Fasern des zweiten Fasertyps derart ausgesponnen werden, dass der Mittelwert ihre Faserdurchmesser kleiner als 10 μm ist.

14. Plissierbares textiles Gebilde nach einem der vorstehenden Ansprüche, **dadurch gekennzeichnet, dass** das textile Gebilde ein Vliesstoff ist.

**Claims**

1. Method for producing a pleatable textile structure having electrostatically charged fibres, preferably for use as a filter material for an electret filter, where a die arrangement is used in the method and is constructed of at least two separate die bars, where at least the first die bar has concentric orifices,

   and a first polymer is spun into fibres of a first fibre type by means of the first die bar, and a second polymer is spun into fibres of a second fibre type by means of the second die bar,
   where the fibres of the first and second fibre types are spun such that the fibres of the first fibre type have a larger mean fibre diameter than the fibres of the second fibre type,
   where the mean values of the diameters of the two fibre types have a distance from one another such that two maxima are clearly apparent in the overall distribution of the fibre diameters,
   where before and/or during the shaping of the textile structure, by means of the collecting device, the fibres of the first fibre type are mixed at least in regions with the fibres of the second fibre type,
   and the fibres of the first fibre type and/or the fibres of the second fibre type, at least during fibre-forming and/or during drawing, are treated with a polar liquid, the fibres being thereby charged electrostatically, where before and/or during the shaping of the textile structure the fibres of the first fibre type are mixed with the fibres of the second fibre type in such a way that, at least in a part-volume of the textile structure, the proportions of the fibres of the first fibre type and of the fibres of the second fibre type exhibit a gradient profile over the cross section of the textile structure, the gradient preferably being formed such that on the side of the nonwoven which is to be disposed on the inflow side in the filter, the proportion of the coarser fibres is higher than the proportion of the finer fibres, and on the side which is to be disposed on the outflow side, the proportion of the finer fibres is higher than the proportion of the coarser fibres.

2. Method according to Claim 1, **characterized in that** not only the fibres of the first fibre type but also the fibres of the second fibre type are electrostatically charged by means of the polar liquid.

3. Method according to one of Claims 1 and 2, **characterized in that** water is used as polar liquid for the electrostatic charging.

4. Method according to Claim 1, **characterized in that** before and/or during the shaping of the textile structure, the fibres of the first fibre type are mixed with the fibres of the second fibre type in such a way that in at least 50% of the volume of the textile structure, the proportions of the fibres of the first fibre type and of the fibres of the second fibre type exhibit a gradient profile.

5. Method according to any of the preceding claims, **characterized in that** a polymer having a melt flow index of less than 800 is used as first polymer for producing the fibres of the first fibre type.

6. Method according to any of the preceding claims, **characterized in that** a die bar with concentric orifices is used for producing the fibres of the second fibre type, and a polymer having a melt flow index of less than 2000 is used as second polymer.

7. Method according to any of Claims 1 to 5, **characterized in that** a die bar comprising Exxon dies is used for producing the fibres of the second fibre type, and a polymer having a melt flow index of greater than 300 is used as second polymer.

8. Method according to any of the preceding claims, **characterized in that** polypropylene, polyethylene, polycarbonate, polylactide, polyamide, polybutylene terephthalate, polyethylene terephthalate, polyvinylidene fluoride or a mixture of these polymers is used as first polymer and/or as second polymer.

9. Method according to any of the preceding claims, **characterized in that** a first polymer and/or a second polymer is used which comprises at least one additive which is able to bind radicals.

10. Method according to any of the preceding claims, **characterized in that** a first polymer and/or a second polymer is used which comprises at least one additive which is able to act as internal lubricant.

11. Method according to any of the preceding claims, **characterized in that** ultrafine fibres having a mean fibre diameter of less than 1 $\mu$m are admixed to the fibres of the first fibre type and the fibres of the second fibre type before and/or during the shaping of the textile structure by means of the collecting device.

12. Pleatable textile structure consisting of fibres produced by means of a melt spinning operation, where the fibres are composed of a first fibre type consisting of a first polymer and of a second fibre type consisting of a second polymer, where the mean values of the diameters of the two fibre types are at a distance from one another such that two maxima are clearly apparent in the overall distribution of the fibre diameters, and the mean diameter of the fibres of the first fibre type is larger than the mean diameter of the second fibre type, where at least in a part-volume of the textile structure, the proportions of the fibres of the first fibre type and of the fibres of the second fibre type exhibit a gradient profile over the cross section of the textile structure, where at least some of the fibres of the first and/or second fibre types are electrostatically charged, where filters having a quality factor of greater than 0.2 are producible with the textile structure.

13. Pleatable textile structure according to Claim 12, **characterized in that** the fibres of the second fibre type are spun such that the mean value of their fibre diameters is less than 10 $\mu$m.

14. Pleatable textile structure according to any of the preceding claims, **characterized in that** the textile structure is a nonwoven.

**Revendications**

1. Procédé de fabrication d'une structure textile pouvant être plissée, comportant des fibres à charge électrostatique, de préférence destinée à l'utilisation en tant que matériau filtrant pour un filtre électret, dans lequel on utilise dans le procédé un ensemble de buses qui est constitué d'au moins deux rampes de buses distinctes, au moins la première rampe de buses comportant des buses concentriques,

et à l'aide de la première rampe de buses un premier polymère est filé en fibres d'un premier type de fibre et au moyen de la deuxième rampe de buses un deuxième polymère est filé en fibres d'un deuxième type de fibre, les fibres du premier et du deuxième type de fibre étant filées de telle façon que les fibres du premier type de fibre ont un plus grand diamètre moyen de fibre que les fibres du deuxième type de fibre, les valeurs moyennes des diamètres des deux types de fibres étant suffisamment éloignées l'une de l'autre pour que deux maximums soient nettement discernables dans la distribution totale des diamètres de fibres, dans lequel avant et/ou pendant la formation de la structure textile les fibres du premier type de fibre sont au moins par zones intimement mélangées à l'aide du dispositif collecteur, et les fibres du premier type de fibre et/ou les fibres du deuxième type de fibre sont traitées par un liquide polaire, au moins pendant la formation des fils et/ou pendant le tirage, ce par quoi les fibres sont chargées électrostatiquement, avant et/ou pendant la formation de la structure textile les fibres du premier type de fibre étant intimement mélangées avec les fibres du deuxième type de fibre, de sorte qu'au moins dans un volume partiel de la structure textile, les proportions des fibres du premier type de fibre et des fibres du deuxième type de fibre présentent sur la section transversale de la structure textile un profil en gradient, le gradient étant configuré de préférence de manière que sur la face du non-tissé qui est destinée à être disposée dans le filtre du côté flux entrant, la proportion des plus grosses fibres soit supérieure à la proportion des fibres plus fines, et sur la face qui est destinée à être disposée du côté flux sortant, la proportion des fibres plus fines soit supérieure à la proportion des plus grosses fibres.

2. Procédé selon la revendication 1, **caractérisé en ce qu'**aussi bien les fibres du premier type de fibre que les fibres du deuxième type de fibre sont chargées électrostatiquement au moyen du liquide polaire.

3. Procédé selon l'une quelconque des revendications 1 et 2, **caractérisé en ce que** pour la charge électrostatique on utilise de l'eau comme liquide polaire.

4. Procédé selon la revendication 1, **caractérisé en ce qu'**avant et/ou pendant la formation de la structure textile les fibres du premier type de fibre sont intimement mélangées avec les fibres du deuxième type de fibre de telle façon que dans au moins 50 % du volume de la structure textile les proportions des fibres du premier type de fibre et des fibres du deuxième type de fibre présentent un profil en gradient.

5. Procédé selon l'une quelconque des revendications précédentes, **caractérisé en ce qu'**en tant que premier polymère pour la production des fibres du premier type de fibre on utilise un polymère ayant un indice de fluidité à chaud inférieur à 800.

6. Procédé selon l'une quelconque des revendications précédentes, **caractérisé en ce que** pour la production des fibres du deuxième type de fibre in utilise une rampe de buses comportant des buses concentriques, et en tant que deuxième polymère on utilise un polymère ayant un indice de fluidité à chaud inférieur à 2 000.

7. Procédé selon l'une quelconque des revendications 1 à 5, **caractérisé en ce que** pour la production des fibres du deuxième type de fibre on utilise une rampe de buses qui comporte des buses Exxon, et en tant que deuxième polymère on utilise un polymère ayant un indice de fluidité à chaud supérieur à 300.

8. Procédé selon l'une quelconque des revendications précédentes, **caractérisé en ce qu'**on utilise en tant que premier polymère et/ou en tant que deuxième polymère du polypropylène, polyéthylène, polycarbonate, polylactide, polyamide, poly(butylène téréphtalate), poly(éthylène téréphtalate), poly(fluorure de vinylidène) ou un mélange de ces polymères.

9. Procédé selon l'une quelconque des revendications précédentes, **caractérisé en ce qu'**on utilise un premier polymère et/ou un deuxième polymère qui contient/contiennent au moins un additif qui peut lier des radicaux.

10. Procédé selon l'une quelconque des revendications précédentes, **caractérisé en ce qu'**on utilise un premier polymère et/ou un deuxième polymère qui contient/contiennent au moins un additif qui peut agir en tant que lubrifiant interne.

11. Procédé selon l'une quelconque des revendications précédentes, **caractérisé en ce qu'**avant et/ou pendant la formation de la structure textile des fibres très fines ayant un diamètre moyen de fibre inférieur à 1 $\mu$m sont ajoutées aux fibres du premier type de fibre et aux fibres du deuxième type de fibre au moyen du dispositif collecteur.

12. Structure textile pouvant être plissée, constituée de fibres qui sont produites au moyen d'un processus de filage à chaud, les fibres étant composées d'un premier type de fibre qui est constitué d'un premier polymère, et d'un deuxième type de fibre qui est constitué d'un deuxième polymère, les valeurs moyennes des diamètres des deux types de fibres étant suffisamment éloignées l'une de l'autre pour que deux maximums soient nettement discernables dans la distribution totale des diamètres de fibres, et le diamètre moyen des fibres du premier type de fibre est plus grand que le diamètre moyen du deuxième type de fibre, au moins dans un volume partiel de la structure textile les proportions des fibres du premier type de fibre et des fibres du deuxième type de fibre sur la section transversale de la structure textile présentant un profil en gradient, au moins une partie des fibres du premier et/ou du deuxième type de fibre étant chargée électrostatiquement, des filtres ayant un facteur de qualité supérieur à 0,2 pouvant être fabriqués avec la structure textile.

13. Structure textile pouvant être plissée selon la revendication 12, **caractérisée en ce que** les fibres du deuxième type de fibre sont filées de telle façon que la valeur moyenne de leurs diamètres de fibres est inférieure à 10 μm.

14. Structure textile pouvant être plissée selon l'une quelconque des revendications précédentes, **caractérisée en ce que** la structure textile est un non-tissé.

Fig.1

Fig. 2

Fig.3

EP 3 523 472 B1

Fig.4

Fig. 5

Form A

Fig.6

Form B

Fig.7

Fig. 8

## Lagenaufbau oben

X2,0k    30 µm

## Fig. 9

Lagenaufbau – Ansicht oben

Lagenaufbau – Ansicht oben

Fig. 10

Teilweise Durchmischung oben

X2,0k   30 µm

Fig. 11

Faseranzahl

Teilweise Durchmischung – Ansicht Oben

Faserdurchmesser [µm]

Teilweise Durchmischung – Ansicht Oben

Kumulierte Häufigkeit [%]

Massenverteilung [%]

Faserdurchmesser [µm]

Kumulierter Massenanteil [%]

Teilweise Durchmischung unten

x500    200 um

Fig. 12

Vollständige Durchmischung
oben

X500    200 µm

Fig. 13

Vollständige Durchmischung – Ansicht Oben

Faseranzahl

Kumulierte Häufigkeit [%]

Faserdurchmesser [µm]

Vollständige Durchmischung – Ansicht Oben

Massenverteilung [%]

Kumulierter Massenanteil [%]

Faserdurchmesser [µm]

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080026659 A1
- US 8372175 B2
- DE 102006013170 A1
- WO 2015195648 A2
- EP 2609238 B1